# EUROPEAN PATENT SPECIFICATION

(11) **EP 2 520 714 B1**
(45) Date of publication and mention of the grant of the patent: **20.11.2013**
(21) Application number: 12005055.4
(22) Date of filing: 19.06.2006
(51) Int. Cl.: E01C 13/08, B23B 5/16

(54) **Synthetic turf surface**
Synthetische Rasenfläche
Surface de gazon synthétique

(30) Priority: 17.06.2005 US 691595 P
(43) Date of publication of application: 07.11.2012
(62) Divisional of application: 06848550.7
(73) Proprietor: TARKETT INC., Farnham, Quebec J2N 1J7 (CA)
(72) Inventor: Prevost, Jean, Westmount Quebec H3Y 2X8 (CA)
(74) Representative: Schwanhäußer, Gernot

(56) References cited:
- WO-A-01/61110
- WO-A-98/40559

## Description

### Technical Field

The present invention is related to synthetic turf systems, and more particularly, to a system for altering the stiffness of the synthetic ribbons or fibers incorporated with the synthetic turf system.

### Background of the Invention

Synthetic turf systems have been used for some sports traditionally played on natural turf, or grass. Natural grass surfaces tend not to stand up well to wear and generally require a great deal of maintenance. Also, the grass of the natural turf surface typically does not grow well in partly or fully enclosed sports stadiums. Overall, synthetic grass surfaces stand up to wear much better than the natural grass surfaces, do not require as much maintenance, and can be used in closed stadiums.

Some synthetic grass surfaces comprise rows of strips, ribbons, or fibers of synthetic material extending vertically from a backing mat with a particulate material-infill or infill layer-located between the ribbons and above the mat. The infill material assists in supporting the synthetic ribbons in a generally upright orientation. In addition, the infill may contribute to the resiliency of the synthetic turf system and aid in its overall drainage. Commonly used components for the infill includes hard particulate matter, e.g., sand; soft particulate matter, e.g., rubber; and, various combinations thereof. In applications requiring additional drainage or resiliency, the backing mat may be placed over a drainage tile or resilient pad, respectively.

The synthetic fibers represent blades of grass that are relatively soft and non-abrasive and are typically constructed of polypropylene or polyethylene. A portion of the synthetic ribbons extends a predetermined distance above the infill layer of particulate material and provides the synthetic turf system with a more grass-like appearance. The exposed ends of the synthetic ribbons can also provide a desired amount of friction to, among other things, a rolling ball used in baseball, soccer, lacrosse, etc. In some situations when the exposed ends of the synthetic fibers are bent or folded over, the coefficient of friction of the synthetic fiber relative to the rolling ball is reduced, and thus the ball will roll at a speed that may be relatively faster than that expected when rolling over a natural grass surface.

After the installation or use of a playing surface comprising a synthetic turf system, it is not uncommon to find a portion-perhaps a significant portion-of exposed synthetic ribbons to be bent or folded over instead of remaining relatively upright. Although folded or bent synthetic ribbons may not be objectionable for use in some events, there are other events such as high-level soccer where it would be undesirable.

Earlier designs of synthetic turf systems have focused on providing synthetic ribbons having a desired length, rigidity, and spacing for a particular sporting event. As such, the playing surface was not adaptable to other events having dissimilar playing characteristics. Depending on the desired playing characteristics for a sporting event, the corresponding physical characteristics of the associated synthetic ribbons may be different. For instance, it may be preferable in one sport as compared to another sport for the ball to roll over the synthetic grass surface at a faster or slower speed. As such, it would be beneficial if the physical characteristics of the synthetic ribbons could be adjusted depending upon the desired playing characteristics of the sporting event or the playing level of the participants. Thus, instead of the synthetic ribbon having a "fixed" amount of rigidity and relative friction, these characteristics could be altered. In situations where different events are held on the playing surface, some of the events may reluctantly be played on a synthetic turf surface that may have less than optimal playing characteristics for that particular sporting event.

WO 98/40559 discloses a synthetic turf surface comprising a plurality of synthetic ribbons operatively attached to a backing mat. The turf surface further comprises an infill layer of particulate material atop the backing mat and dispersed among the synthetic ribbons such that portions of the synthetic ribbons extend above the infill layer. Such a synthetic turf may be manufactured by tufting rows of ribbons through a backing member. Once the ribbons are tufted in place, the backing member is coated on its back side to adhere the ribbons to the backing member.

WO 01/61110 A1 discloses a method of manufacturing a synthetic turf in which a flat face yam and a textured yam are knitted into a backing that has a coating/seal on it that gives the artificial turf greater stability and strength. The coating may comprise at least one of acrylic, polyurethane, latex or some combination thereof to assist in preventing the yarns from undesirably detaching from the artificial turf with extended use.

### Summary of the Invention

It is an object of the present invention to provide a synthetic turf system whose physical characteristics can be altered dependent upon the desired playing characteristics of the event.

This object is achieved by the system of claim 1.

As such, upon application of the stiffening agent, only the stiffness of the first synthetic ribbon will be increased.

The stiffening agent can be water soluble or insoluble.

Other advantages and aspects of the present invention will become apparent upon reading the following description of the drawings and detailed description of the invention.

### Brief Description of the Drawings

FIG. 1 is a cross-sectional view of a synthetic turf system of the present invention depicting portions of the synthetic ribbons prior to application of a stiffening agent thereto;
FIG. 2 is a cross-sectional view of the synthetic turf system of FIG. 1 subsequent to the application of a stiffening agent thereto;
FIG. 3 is a cross-sectional view of a synthetic turf system of another embodiment of the present invention prior to the application of a stiffening agent thereto, wherein the FIG. 3 is a cross-sectional view of a synthetic turf system of another embodiment of the present invention prior to the application of a stiffening agent thereto, wherein the synthetic turf system comprises a first synthetic ribbon being responsive to a stiffening agent and a second synthetic ribbon being non-responsive to a stiffening agent; and,
FIG. 4 is a cross-sectional view of the synthetic turf system of FIG. 3 subsequent to the application of the stiffening agent thereto.

### Detailed Description

While the present invention is susceptible of embodiment in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

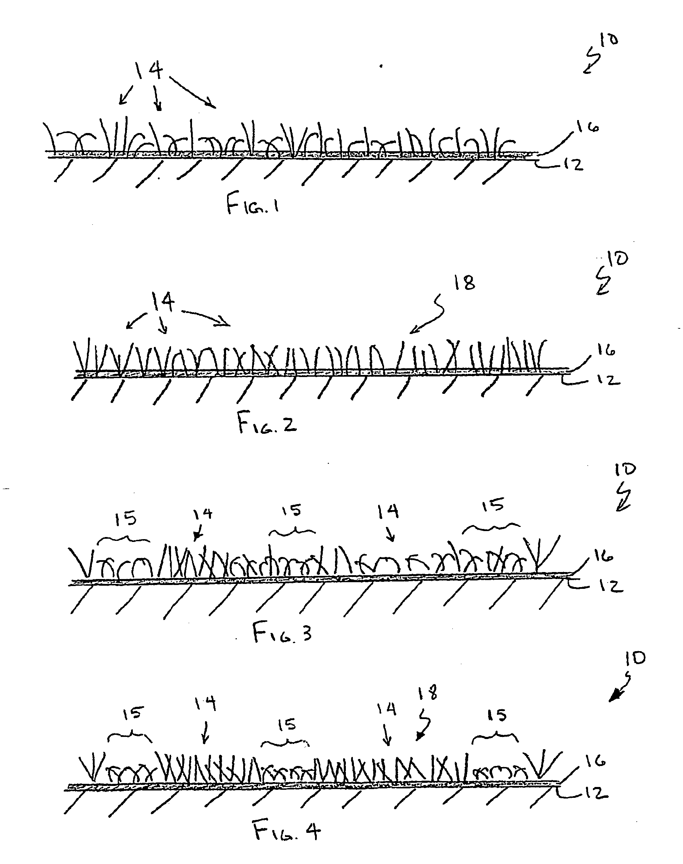

The present invention is directed to altering the physical characteristics of a synthetic turf system 10. Referring to FIG. 1, the synthetic turf system 10 generally includes a synthetic turf surface having a backing mat 12 and a plurality of synthetic fibers or ribbons 14. The synthetic turf surface 10 may further include an infill layer 16 positioned above the backing mat 12 and amongst the synthetic ribbons 14. The infill layer 16 comprises a layer of particulate matter. The particulate matter can include any type of infill material, including, and not limited to, hard particles such as sand, soft particles such as rubber, or various combinations of hard and soft particles.

The synthetic ribbons 14 are operatively attached to the backing mat 12 using any one of the techniques known to one of ordinary skill in the art, e.g., gluing, stitching, heat-melting, etc. Portions of the synthetic fibers 14 extend above the infill layer 16 and are thus exposed to represent blades of grass.

The exposed ends of synthetic ribbons 14 may be groomed using a brush or the like to stand the exposed ends in a relatively upright orientation. A stiffening agent 18 is applied to the exposed synthetic fibers 14 and ultimately dries and adheres to the synthetic fibers. Preferably, the stiffening agent 18 is sprayed onto the synthetic ribbons 14; however, it is to be understood that other types of application techniques known to one of ordinary skill in the art may be used to facilitate application of the stiffening agent 18 to the synthetic ribbons 14, e.g., brushing. As shown in FIG. 2, once the stiffening agent 18 is dry-via naturally drying or air-blown drying-the exposed portions of the synthetic ribbons 14 stiffen into a generally upright position.

In the preferred embodiment, the stiffening agent 18 comprises diethylene glycol monobutyl ether, acrylic resin, methonal, and texanol and further includes a pH level of approximately 6-8. A commercial product known as V-Restore is a stiffening agent provided by Coatings Specialist Group that is capable of use with the present invention.

It is contemplated that any type of stiffening agent capable of being operatively applied and adhered to the synthetic turf system can be utilized to stiffen the synthetic ribbons. It is further considered that one of ordinary skill in the art also appreciates that the application and amount of such stiffening agents will provide varying levels of increased rigidity of the synthetic ribbons, and yet guard against the degradation of the synthetic ribbon by becoming inflexible, brittle, and therefore susceptible to breaking. As such, in consideration of the preferred level of ribbon rigidity sought in view of the desired playing characteristics of the sporting event, one can readily determine the amount of stiffening agent to be applied to the synthetic ribbons.

The stiffening agent can be colored, colorless, and water soluble or insoluble. The use of a water soluble stiffening agent 18 provides the ability to adapt and adjust the playing characteristics of the synthetic turf system relative to rigidity and the corresponding coefficient of friction of the synthetic ribbons 14. That is, the water soluble stiffening agent 18 can be applied to the synthetic ribbons 14 to stiffen the ribbons for use in one playing event; and then the stiffening agent can be removed via water rinsing to return the synthetic ribbons to their pre-stiffened state for use in another playing event.

A portion of the synthetic ribbons (designated by reference 15) may not permit the stiffening agent 18 to be adhered thereto. That is, the stiffening agent 18 will only adhere to, and thus stiffen, a predetermined portion of the synthetic ribbons 14. As such, the synthetic playing surface can be designed such that its overall rigidity or friction with respect to the objects used in the event, e.g., ball, stick, shoes; can be altered depending upon the desired playing characteristics of the synthetic surface and the type and amount of synthetic ribbons.

Referring now to FIGS. 3 and 4, the synthetic playing surface according to the present invention has partially responsive synthetic ribbons and includes a first 14 and second 15 synthetic ribbon operatively attached to the backing mat 12. Only the first synthetic ribbon 14 is comprised of cooperative material such that it is responsive to the stiffening agent 18 upon application to the first synthetic ribbon; but the composition of the second synthetic ribbon 15 is not cooperative or responsive with the stiffening agent and thus its rigidity will not be altered upon application of the stiffening agent. Upon application and subsequent drying of the stiffening agent 18 to the synthetic turf surface, only the first synthetic ribbon 14 will stiffen and the second synthetic ribbon 15 will not.

As described above, the present invention provides for a synthetic playing surface with the capability of being constructed in view of its intended usage and desired playing characteristics; and thus includes a variety of configurations of the first 14 and the second 15 synthetic ribbons. For example, in some synthetic turf system applications it may be desirable to have a sufficient amount of folded synthetic ribbons to assist in retarding the displacement of the infill particles, e.g., infill splash; while in other applications, it may be desirable to have a sufficient amount of generally upright synthetic ribbons to provide adequate resistant to a rolling ball; and in other applications, it may be beneficial to have "slower" or "faster" segments of the playing surface.

## Claims

1. A synthetic turf system comprising:
a backing mat (12);
a first synthetic ribbon (14) being operatively attached to the backing mat (12) and comprising polypropylene or polyethylene;
a second synthetic ribbon (15) being operatively attached to the backing mat (12); and,
a stiffening agent (18) comprising diethylene glycol monobutyl ether and adhering to the first synthetic ribbon (14) and not adhering to the second synthetic ribbon (15).

2. The synthetic turf system of Claim 1 wherein the stiffening agent (18) comprises an acrylic resin.

3. The synthetic turf system of Claim 1 wherein the stiffening agent (18) is water soluble.

4. The synthetic turf system of Claim 1 wherein the stiffening agent (18) is water insoluble.

5. The synthetic turf system of Claim 1 wherein the stiffening agent (18) has a pH level of approximately 6-8.

## Patentansprüche

1. Ein Kunstrasensystem mit :
einer Verstärkungsmatte (12);
einem ersten synthetischen Band (14), das wirksam an der Verstärkungsmatte (12) befestigt ist und Polypopylen oder Polyethylen aufweist;
einem zweites synthetisches Band (15), das wirksam an der Verstärkungsmatte (12) befestigt ist; und
einem Versteifungsmittel (18), das Diethylenglykolmonobutylether aufweist und an dem ersten synthetischen Band (14) haftet und an dem zweiten synthetischen Band (15) nicht haftet.

2. Das Kunstrasensystem nach Anspruch 1, wobei das Versteifungsmittel (18) ein Acrylharz aufweist.

3. Das Kunstrasensystem nach Anspruch 1, wobei das Versteifungsmittel (18) wasserlöslich ist.

4. Das Kunstrasensystem nach Anspruch 1, wobei das Versteifungsmittel (18) wasserunlöslich ist.

5. Das Kunstrasensystem nach Anspruch 1, wobei das Versteifungsmittel (18) einen pH-Wert von etwa 6-8 hat.

## Revendications

1. Système de gazon synthétique comprenant :
un tapis de support (12),
un premier ruban synthétique (14) étant fonctionnellement fixé au tapis de support (12) et comprenant un polypropylène ou un polyéthylène,
un deuxième ruban synthétique (15) étant fonctionnellement fixé au tapis de support (12), et
un agent raidisseur (18) comprenant un éther de monobutyl glycol diéthylène et adhérant au premier ruban synthétique (14) et n'adhérant pas au deuxième ruban synthétique (15).

2. Système de gazon synthétique selon la revendication 1, dans lequel l'agent raidisseur (18) comprend une résine acrylique.

3. Système de gazon synthétique selon la revendication 1, dans lequel l'agent raidisseur (18) est soluble dans l'eau.

4. Système de gazon synthétique selon la revendication 1, dans lequel l'agent raidisseur (18) est insoluble dans l'eau.

5. Système de gazon synthétique selon la revendication 1, dans lequel l'agent raidisseur (18) présente un niveau de pH d'approximativement 6 à 8.
